# EUROPEAN PATENT APPLICATION

(11) **EP 4 001 051 A1**
(43) Date of publication of application: **25.05.2022**
(21) Application number: 21207689.7
(22) Date of filing: 11.11.2021
(51) Int. Cl.: B62D 1/06

(54) **HEATED STEERING WHEEL AND METHOD OF MAKING SAME**

(30) Priority: 16.11.2020 US 202063114112 P
(71) Applicant: IMMI Vehicle Improvement Products, Inc., Antioch, Illinois 60002 (US)
(72) Inventor: Roe, David J., Burlington, WI, 53105 (US); Tello, Victor H., Buffalo Grove, IL, 60089 (US)
(74) Representative: Beyer, Andreas

(57) **Abstract**

A process for forming a molded, heatable steering wheel assembly may include providing or obtaining a steering wheel frame including at least one hand grip coupled to one or more spokes, coupling at least one heating element to, or spacing the at least one heating element from, at least a portion of the at least one hand grip to form a steering wheel assembly, placing the steering wheel assembly in a mold, dispensing a formable medium into the mold such that the formable medium encases at least the at least one hand grip and the at least one heating element, and curing the formable medium to form the molded, heatable steering wheel assembly.

## Description

### CROSS-REFERENCE TO RELATED APPLICATION

This application claims the benefit of, and priority to, U.S. Provisional Patent Application Ser. No. 63/114,112, filed November 16, 2020, the disclosure of which is expressly incorporated herein by reference in its entirety.

### TECHNICAL FIELD

The present disclosure relates generally to steering wheels for operator-driven vehicles, e.g., motor vehicles, and more specifically to heated steering wheels and methods of making the same.

### BACKGROUND

Steering wheels for operator-driven vehicles, such as motor vehicles of any and all types, are known, and may be provided in myriad styles and configurations. Heating arrangements are provided for some such steering wheels which, upon activation, apply thermal energy, i.e., heat, to at least a portion of a hand grip portion of the steering wheel.

### SUMMARY

The present disclosure may comprise one or more of the features recited in the attached claims, and/or one or more of the following features and combinations thereof. In one aspect, a process for forming a molded, heatable steering wheel assembly may comprise providing or obtaining a steering wheel frame including at least one hand grip coupled to one or more spokes, coupling at least one heating element to, or spacing the at least one heating element from, at least a portion of the at least one hand grip to form a steering wheel assembly, placing the steering wheel assembly in a mold, dispensing a formable medium into the mold such that the formable medium encases at least the at least one hand grip and the at least one heating element, and curing the formable medium to form the molded, heatable steering wheel assembly.

In another aspect, a process for forming a molded, heatable steering wheel assembly may comprise providing or obtaining a steering wheel frame including at least one hand grip coupled to one or more spokes, placing the steering wheel frame in a mold, dispensing a first amount of a formable medium into the mold such that the first amount of the formable medium encases the at least one hand grip, at least partially curing the first amount of the formable medium, placing at least one heating element on the at least partially cured first amount of the formable medium over at least a portion of the at least one hand grip, dispensing a second amount of the formable medium into the mold such that the second amount of the formable medium encases the at least one heating element and contacts at least a portion of the at least partially cured first amount of the formable medium, and curing the formable medium to form the molded, heatable steering wheel assembly.

### BRIEF DESCRIPTION OF THE DRAWINGS

FIG. 1 is a simplified flowchart of an embodiment of a process for forming a heated steering wheel assembly.
FIG. 2A is a front elevated view of an embodiment of a steering wheel frame used in the process illustrated in FIG. 1.
FIG. 2B is a right side elevational view of the steering wheel frame illustrated in FIG. 2A.
FIG. 2C is a rear elevational view of the steering wheel frame illustrated in FIGS. 2A and 2B.
FIG. 3 is a plan view of a segment of an embodiment of a thermal insulator sized and configured to be received on and over at least a portion of the hand grip of the steering wheel frame illustrated in FIGS. 2A-2C.
FIG. 4 is a front plan view of a length of the thermal insulator illustrated in FIG. 3 received on and over a majority of the hand grip of the steering wheel frame illustrated in FIGS. 2A-2C.
FIG. 5 is a plan view of a heating element strip configured to be received on and at least partially about the thermal insulator illustrated by example in FIG. 4.
FIG. 6A is a front plan view of two heating element strips received on and at least partially over the thermal insulator illustrated in FIG. 4 so as to span the length of the hand grip of the steering wheel.
FIG. 6B is a right side perspective view of the steering wheel illustrated in FIG. 6A.
FIG. 7 is a cross-sectional view through the steering wheel illustrated in FIGS. 6A and 6B as viewed along section lines 7-7 of FIG. 6A.
FIG. 8A is a top perspective view of an embodiment of a mold having a top mold and a bottom mold, with the steering wheel of FIGS. 6A and 6B received within the bottom mold.
FIG. 8B is a top perspective view of the mold illustrated in FIG. 8A, shown with the top and bottom molds coupled together and with a formable medium source operatively coupled to the top mold.
FIG. 9A is a front plan view of the steering wheel of FIGS. 6A and 6B after the molding process illustrated by example in FIGS. 8A and 8B, such that a formed medium surround and encapsulates portions of the steering wheel.
FIG. 9B is a front plan view similar to FIG. 9A but with the formed medium removed from the left side of the steering wheel to further illustrate the molding process illustrated by example in FIGS. 8A and 8B.
FIG. 10 is a front plan view of the steering wheel of FIGS. 9A and 9B after mounting a number of control modules thereto.
FIG. 11 is a simplified flowchart of another embodiment of a process for forming a heated steering wheel assembly.

### DESCRIPTION OF THE ILLUSTRATIVE EMBODIMENTS

For the purposes of promoting an understanding of the principles of this disclosure, reference will now be made to a number of illustrative embodiments shown in the attached drawings and specific language will be used to describe the same.

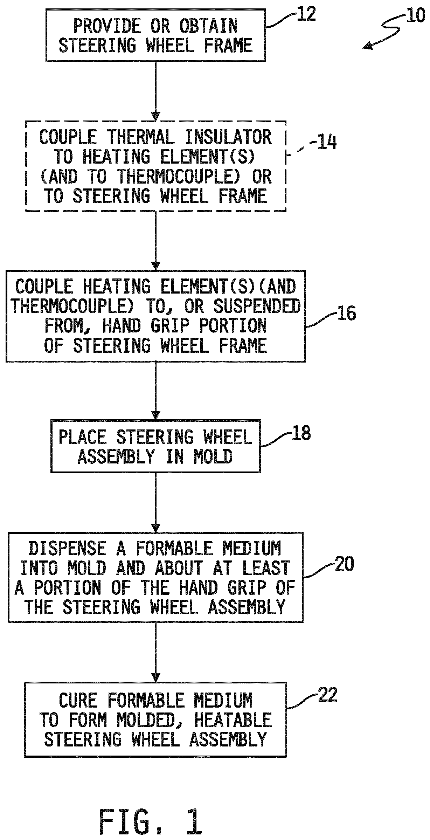

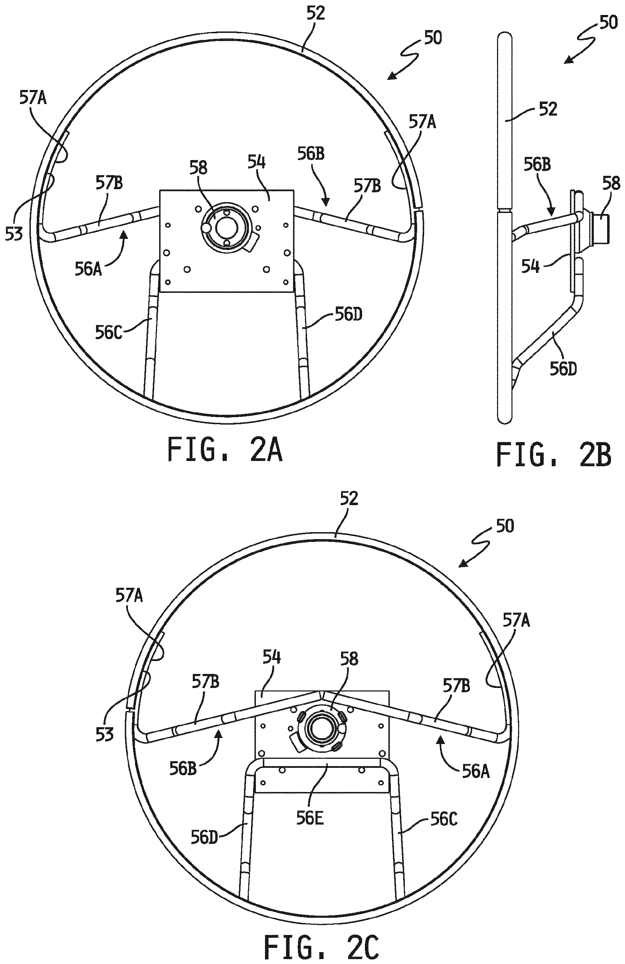

This disclosure relates to steering wheels for operator-driven vehicles, e.g., motor vehicles, and more particularly to heated steering wheels and methods of making the same. Referring now to FIG. 1, a simplified flowchart is shown illustrating an embodiment of a process 10 for forming a molded, heatable steering wheel assembly. Various stages of the process 10 are depicted by example in FIGS. 2A-10, and these figures will be referred below to demonstrate hardware examples of such stages of the steering wheel molding process 10. It will be understood, however, that such hardware examples are provided only to demonstrate illustrative examples of some of the stages of the process 10 illustrated in FIG. 1, and the hardware examples depicted in FIGS. 2A-10 therefore should not be considered to be limiting in any way.

The process 10 depicted in FIG. 1 illustratively begins at step 12 where a steering wheel frame is provided, e.g., manufactured or obtained, post-manufacture, from a suitable source. An illustrative embodiment of a steering wheel frame 50 is shown by example in FIGS. 2A-2C, and includes a hand grip 52 spaced apart from a center plate 54 with a number of spokes 56A-56D extending between and coupled to the hand grip 52 and the center plate 54. A wheel mounting hub 58 is coupled to the center plate 54. The wheel mounting hub 58 defines a rotational axis centrally therethrough which is co-linear with an axis of rotation of the hand grip 52 such that the hand grip 52 rotates about the rotational axis defined through the mounting hub. In the illustrated embodiment, the hand grip 52 is provided in the form of an annular tube or ring which circumscribes the center plate 54, and in this embodiment four spokes 56A-56D extend radially away from the center plate 54 and couple the center plate 54 to the annular hand grip 52 at approximately the 9, 3, 8 and 4 o'clock positions respectively of the annular hand grip 52. In the illustrated embodiment, the spokes 56A and 56B each include an arcuate leg 57A mounted to an inwardly-facing portion of the hand grip 52 and a linear leg 57B extending away from the hand grip 52 and coupled to the center plate 54, wherein the arcuate and linear legs 57A, 57B form an angle therebetween, e.g., of slightly less than 90 degrees, although this angle can have other values in alternate embodiments. The radius of curvature of the arcuate legs 57A matches that of the hand grip 52, and the angle between the arcuate and linear legs 57A, 57B is selected to position the free end of the linear legs 57B on the center plate 54. The spokes 56C, 56D are each illustratively linear. In some alternate embodiments, one or more of the linear legs 57B and/or spokes 56C, 56D may be non-linear or piece-wise linear, and in any case more or fewer spokes may be coupled to and between the hand grip 52 and the center plate 54. In some embodiments, two or more of the spokes may be coupled together or may be integral with one another so as to form a uniform structure. In the illustrated embodiment, for example, the spokes 56C and 56D at the 8 and 4 o'clock positions respectively are joined together at their top ends by a cross-member 56E coupling the two ends together such that the spokes 56C, 56D and cross-member 56E form an integral, uniformly constructed structure as best shown in FIG. 2C. In this embodiment, the cross-member 56E is secured to the center plate 54 as also best shown in FIG. 2C.

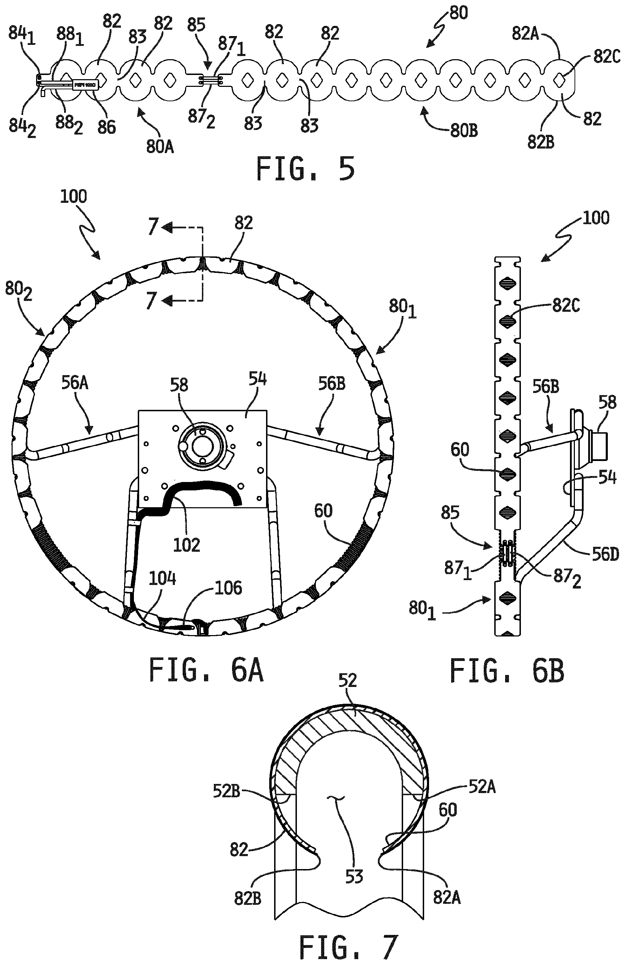

In the illustrated embodiment, the inwardly-facing surface of the annular tube or ring forming the hand grip 52 forms an open channel 53 extending into the hand grip 52 about the inner periphery thereof as best shown in FIGS. 2A, 2C and 7. In this embodiment, the arcuate legs 57A of the spokes 56A, 56B are sized and shaped complementarily to the inner circumference of the hand grip 52 and to extend at least partially into the channel 53 between the terminal ends 52A, 52B of the channel 53 (see, e.g., FIG. 7), and free ends of the spokes 56C and 56D likewise extend into the channel 53, to mount and secure the spokes 56A-56D to the hand grip 52. In this embodiment, the annular tube or ring forming the hand grip 52 illustratively forms a "U" shape in transverse cross-section, as illustrated by example in FIG. 7, although in other embodiments the transverse cross-section of the annular tube or ring forming the hand grip 52 may form other shapes, e.g., "C" shape or other openended shape.

In alternate embodiments, the annular tube or ring forming the hand grip 52 may be a solid, or hollow but closed structure. In some alternate embodiments, the hand grip 52 may be a circumferentially closed structure which circumscribes the center plate 54 as depicted by example in FIG. 2A, but may have any non-annular profile. In other alternate embodiments, the hand grip 52 may be provided in the form of two or more annular and/or non-annular tubes or other suitable structures separate from one another and each coupled to the center plate 54 by one or more linear or non-linear spokes. In some such alternate embodiments, two or more of the annular and/or non-annular tubes may be coupled to one another or positioned in contact with one another so as to at least partially circumscribe the center plate 54. In other such alternate embodiments, the two or more annular and/or non-annular tubes may be radially spaced apart from one another relative to the center plate 54. In some alternate embodiments, the hand grip 52, or one or more parts thereof in embodiments in which the hand grip 52 includes multiple parts, may be provided in the form of a non-closed structure, e.g., having at least one opening or at least one channel defined therein. In some such embodiments, the hand grip 52, or one or more parts thereof, may be U-shaped, D-shaped, or C-shaped in cross-section, or have other cross-sectional shapes, whether the hand grip 52 is or includes one or more closed structures and/or one or more openings or channels. In other alternate embodiments, the center plate 54 may be omitted. Generally, the steering wheel frame 50 may be or include one or more wire forms, one or more plates, two or more spokes operatively mounted to the central hub 58 (i.e., no rigid hand grip portion), or any combination thereof. In some alternate embodiments, one or more of the hand grip 52, the center plate 54, one or more of the spokes 56A-56D and the central hub 58 may be cast-formed in accordance with a conventional casting process.

In the embodiment illustrated in FIG. 2A, the hand grip 52, the center plate 54 and the spokes 56A-56D are all illustratively rigid structures formed of suitable materials, e.g., steel or other suitable rigid material. In some alternate embodiments, one or more of the hand grip 52, the center plate 54 and one or more of the spokes 56A-56D may be provided in the form of one or more non-rigid, formable materials made to become rigid as part of the molding process 10 illustrated in FIG. 1, e.g., via curing, heating, cooling or the like.

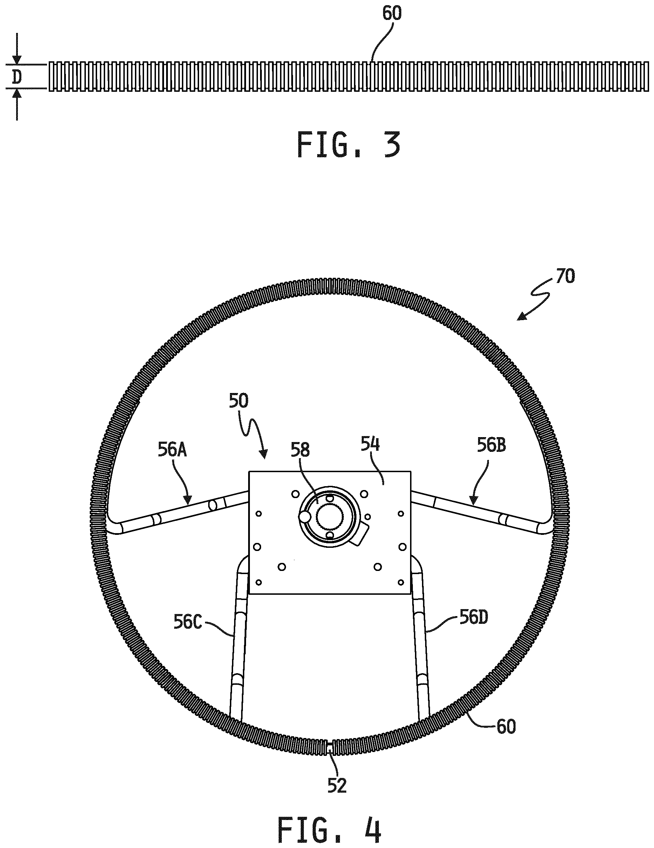

Referring again to FIG. 1, the process 10 advances, in some embodiments, from step 12 to step 14 as shown by dashed-line representation. In embodiments of the process 10 in which step 14 is included, a thermal insulator is coupled to one or more heating elements and/or directly to the hand grip 52 of the steering wheel frame 50 such that, in any case, the one or more heating elements and the hand grip 52 of the steering wheel frame 50 are thermally insulated from one another by the thermal insulator. In some embodiments, the thermal insulator may illustratively be provided in the form of a single length or multiple segments of a corrugated or other tubing formed of a suitable thermal insulating material, e.g., a suitable plastic or other material. Referring to FIG. 3, for example, an embodiment is shown of a thermal insulator 60 provided in the form of a single length of a conventional split wire loom tubing formed of a suitable polymer or other suitable material. In such embodiments, the tubing 60 is configured or selected to have an inner diameter D sized to be received on and at least partially about the hand grip 52 of the steering wheel frame as illustrated by example in FIGS. 4 and 7. In one example implementation, the inner diameter D is 0.5 inches, although in other embodiments D and/or the outer diameter of the hand grip 52 may have other dimensions. In alternate embodiments which include it, the thermal insulator 60 may be provided in the form of one or more segments of a flexible, semi-flexible or rigid, thermal insulating material positioned on and/or at least partially about, and at least partially along, the hand grip 52, or in the form of a flexible or semi-flexible thermal insulating material wrapped about or attached to one or more heating elements. In any case, in the embodiment illustrated in FIG. 4, the thermal insulator 60 is sized to extend completely circumferentially about the hand grip 52 to produce a hand grip subassembly 70 made up of a combination of the hand grip 52 and the thermal insulator 60 received thereon.

In some alternate embodiments, the thermal insulator may be excluded and the one or more heating elements may be suspended above, or from, or otherwise radially offset from, the hand grip 52 via one or more conventional spacers and/or other offset structure(s). In such embodiments, step 14 may likewise be omitted from the process 10. In such embodiments, the one or more conventional spacers, stand-offs and/or other offset structure(s) need only space and hold the one or more heating elements sufficiently away from the hand grip 52 until the formable medium is formed on and about the hand grip 52, after which the formed medium will operate to maintain the heating element(s) spaced apart from the hand grip 52.

Following step 14, or in embodiments in which step 14 is omitted, following step 12, the process 10 advances to step 16 where one or more heating element(s) is/are coupled to or suspended from, at least a portion of the hand grip 52 of the steering wheel frame 50. In embodiments in which the heating element(s) is/are coupled to the hand grip 52, step 14 is illustratively included such that a thermal insulator, e.g., the thermal insulator 60 illustrated by example in FIGS. 3-7, is provided between the hand grip 52 and the heating element(s). In alternate embodiments in which the heating element(s) is/are suspended above, suspended from or otherwise spaced apart from the hand grip 52 as described above, a thermal insulator need not be provided and step 14 may therefore be omitted.

An illustrative embodiment of the one or more heating elements coupled to or suspended from, at least a portion of the hand grip 52 of the steering wheel frame 50 at step 16 is shown in FIG. 5. In the embodiment depicted in FIG. 5, the one or more heating elements is illustratively provided in the form of a plurality of heating elements 82 sequentially connected together to form a strip 80 of heating elements (i.e., a heating element strip 80). Each heating element 82 is illustratively a relatively flat structure made up of a coil-based or other conventional, electrically-activated heatable structure sandwiched between two opposed polymer layers or other layers of electrical insulation. In the illustrated embodiment, each heating element 82 is provided on the form of a closed, circular or O-shaped structure having a top 82A, a bottom 82B opposite the top 82A, and an open center 82C, although it will be understood that one or more of the heating elements 82 may have other shapes which may be solid or which may include one or more openings. One or both of the sides of many of the heating elements 82 are connected to the side(s) of adjacent ones of the heating elements 82 via a ribbon or band 83. In some embodiments, the ribbons or bands 83 are themselves heating elements, e.g., constructed identically as the heating elements 82 described above, although in other embodiments the ribbons or bands 83 may be configured as electrical connections, i.e., not heating elements per set but configured only to electrically connect together adjacent ones of the heating elements 82. In alternate embodiments, the ribbons or bands 83 may be omitted, and the sides of the heating elements 82 may be coupled directly together. In any case, one end of the heating element strip 80 is configured to electrically connect the strip 80 to a source of electrical power, and in the illustrated embodiment two electrical contacts 841 and 842 are defined at the left-most end of the strip 80 for this purpose, as depicted by example in FIG. 5.

The heating element strip 80 illustratively includes a plurality of sequentially-connected heating elements 82. In the embodiment illustrated in FIG. 5, for example, the heating element strip 80 includes 14 heating elements 82, although alternate embodiments may include more or fewer heating elements 82. In the illustrated embodiment, the heating element strip 80 is formed from two separate heating elements sub-strips 80A and 80B, wherein the heating element sub-strip 80A includes the electrical contacts 841, 842 defined on a first one of four heating elements 82 sequentially coupled together by three respective heating element ribbons or bands 83, and wherein the heating element sub-strip 80B includes ten heating elements 82 sequentially coupled together by nine respective heating element ribbons or bands 83. Opposed ends of the sub-strips 80A and 80B are illustratively coupled together at a joined region 85 of the heating element strip 80 via two respective electrical wires 871, 872. In this embodiment, the 14 heating elements 82 are illustratively sized to each wrap at least partially around, i.e., radially around, the hand grip subassembly 70 (see, e.g., FIG. 3), with the joined region 85 extending at least partially along, i.e., circumferentially along, the outer circumferential surface of the hand grip subassembly 70, as illustrated by example in FIGS. 6A and 6B. In alternate embodiments, the joined region 85 may be omitted, and the heating element strip 80 may consist of 14 (or more or fewer) heating elements 82 sequentially coupled together. In any case, the free end (right-most end in FIG. 5) of the heating element strip 80 is illustratively truncated at the outer edge of the last heating element 82 as illustrated by example in FIG. 5.

In the embodiment illustrated in FIG. 5, the heating element strip 80 illustratively includes a conventional, temperature-based safety cut-out switch 86 electrically coupled at one end to the electrical contact 842 via a wire 881, and electrically coupled at a second end to another wire 882. In this embodiment, the heating element strip 80 is configured to be electrically connected to a source of electrical power by electrically connecting the contact 841 and the free end of the wire 882 to the source of electrical power. In one embodiment, the switch 86 is configured to open, thereby stopping the flow of current from the source of electrical power to the heating element strip 80, at a trigger temperature of approximately 100 degrees Celsius, although in alternate embodiments the trigger temperature may be greater or less than 100 degrees Celsius. In alternate embodiments, the switch 86 may be omitted. In some such embodiments which include the thermistor 106, signals produced by the thermistor 106 may be used to control, e.g., start and stop, the flow of current to the heating element strip 80. In one embodiment, the heating element strip 80 is a 12-volt DC, 5-ampere strip of 14 heating elements 82 each approximately 1 inch in width (i.e., from the top 82A to the bottom end 82B), with the strip 80 being approximately 27.5 inches in total length and having a nominal electrical resistance of approximately 5.2 ohms, although in other embodiments the heating element strip 80 may have different dimensions and/or characteristics, and/or be configured to be driven at other voltages and/or currents.

Referring now to FIGS. 6A-7, an example implementation is shown of step 16 of the process 10 illustrated in FIG. 1 in which the heating element(s) is/are mounted to the steering wheel frame 52. In the illustrated example, two of the heating element strips 80, illustrated by example in FIG. 5, are coupled to the hand grip subassembly 70 illustrated by example in FIG. 3. In the illustrated example, one heating element strip 801 begins, i.e., with the heating element 82 to which the contacts 841, 842 are mounted, at approximately the 6 o'clock position on the hand grip subassembly 70, and runs counterclockwise upwardly around and about the right side of the hand grip subassembly 70 as illustrated in FIG. 6A. The other heating element strip 802 likewise begins, i.e., with the heating element 82 to which the contacts 841, 842 are mounted, at approximately the 6 o'clock position on the hand grip subassembly 70, and runs clockwise upwardly around and about the left side of the hand grip subassembly 70 as also illustrated in FIG. 6A. In each case, the joined region 85 is positioned at approximately the 4 o'clock and 8 o'clock positions respectively, as illustrated in FIG. 6A, and in this embodiment the joined region 85 runs along the outer periphery of hand grip subassembly 70 as illustrated by example in FIG. 6B. Illustratively, the total number of heating elements 82 in the strips 80 are selected such that both heating element strips 801, 802 terminate adjacent to each other at approximately the 12 o'clock position on the hand grip subassembly 70 as further illustrated by example in FIG. 6A. In some alternate embodiments, the heating element strip 80 may be configured such that more or fewer than two heating element strips 801, 802 may be used to circumferentially span the hand grip subassembly 70. In other alternate embodiments, the heating element strip(s) 80 may include more than one joined region 85. In still other alternate embodiments, the heating element strip(s) 80 may be mounted to the hand grip subassembly 70 so as to span less than the total circumference of the hand grip subassembly 70 and/or to extend over only one or more sub-sections of the hand grip subassembly 70.

In the illustrated embodiment, the heating element strips 801, 802 are mounted to the hand grip subassembly 70 such that each heating element 82 wraps radially about the outer, arcuate surface of the hand grip subassembly 70, and such that the top and bottom ends 82A, 82B are spaced apart from one another over the channel 53 formed into the inner circumferential surface of the hand grip 52, i.e., between the two terminal ends 52A, 52B of the channel 53, as illustrated by example in FIG. 7. In the illustrated embodiment, the heating element strips 801, 802 are thus coupled or mounted to the hand grip subassembly 70 completely about the periphery of the combination of the hand grip 52 and the thermal insulator 60, i.e., such that the heating element strips 801, 802 together completely circumscribe an outer surface of the hand grip subassembly 70 to produce a resulting steering wheel assembly 100. In some alternate embodiments, heating element strips, in addition to being coupled to the hand grip subassembly 70, may be coupled to and along one or more of the spokes 56A-56D.

In some embodiments, as part of step 14 and/or step 16, a thermocouple may be coupled to or otherwise disposed along at least a portion of the hand grip 52 of the steering wheel frame 50, along at least a portion of the thermal insulator 60 in embodiments which include it, and/or along at least a portion of one or more heating elements. In such embodiments, the thermocouple may take any conventional form including, but not limited to, one or more conventional temperatures sensors, such as one or more thermistors. In the embodiment illustrated in FIG. 6A, for example, a conventional thermistor 106 is electrically connected to at least one wire 104. The thermistor 106 is, in this example embodiment, positioned over one of the several heating elements 82 and secured thereto via a suitable tape, e.g., a conventional polyimide tape, although other conventional fixation structures and/or media may alternatively be used. It will be understood that the sole purpose of the tape or other conventional fixation structure and/or media is, in this embodiment, to maintain the thermistor 106 on and/or over the selected heating element 82 until the formable medium is formed over the hand grip 52 as will be described in detail below.

In alternate embodiments, the thermistor 106 (or other thermocouple device) may be positioned under a heating element, e.g., between the heating element 82 and the thermal insulator 60 in the embodiment illustrated in FIG. 6A, or at any other suitable location and position along the hand grip 52, along the thermal insulator 60 or along the hand grip subassembly 70. In some embodiments, two or more thermocouples may be implemented and suitably positioned and located on and along the hand grip 52, along the thermal insulator 60 or along the hand grip subassembly 70. In any case, in embodiments which include at least one thermocouple, at least one electrical wire is operatively coupled to the one or more thermocouples and routed to the center plate 54 for electrical connection of the one or more thermocouples to a conventional signal sensing circuit. In the embodiment illustrated in FIG. 6A, for example, one end of at least one electrical wire 104 is electrically connected to the thermistor 106, and the at least one electrical wire 104 is routed from the thermistor 106 along the hand grip 52 to one of the spokes, and is then routed along (and attached to) one of the spokes, e.g., 56C, to the center plate 54. Likewise, electrical wires 102, e.g., 4 such wires, are routed from the center plate 54, along one of the spokes 56, and into electrical connection with the heating element strips 801, 802, e.g., one each to the contact 841 and the free end of the wire 882 of each heating element strip 801, 802, as illustrated by example in FIG. 6A.

Electrical power is supplied to the heating element strips 801, 802 via the electrical wires 102 from a suitable supply of electrical power external to the steering wheel assembly 100, e.g., from an electrical power source of the motor vehicle in which the steering wheel is to be mounted. A conventional control module or other decision-making circuit will illustratively be mounted to the center plate 54 or at a location remote from the steering wheel, and will be operatively coupled to the source of electrical power and to the electrical wires for selectively supplying electrical power from the source of electrical power to the heating element strips 801, 802 to cause them to heat to a target temperature in a conventional manner. In embodiments in which one or more thermistors 106 (and/or other thermocouple devices) is/are mounted to the steering wheel subassembly 100, the electrical wire(s) 104 is/are electrically connected to the control module or other decision-making circuit, and signals produced by the one or more thermistors 106 (and/or other thermocouple devices) will be used by the control module in accordance with a conventional control strategy to cause the heating element strips 801, 802 to heat to a target temperature and to maintain the heating element strips 801, 802 at the target temperature for at least a selected or predetermined duration. In some embodiments in which an open-loop control strategy is used to control electrical power supplied to the heating element strips 801, 802, the one or more thermocouples, e.g., the one or more thermistors 106, may be omitted.

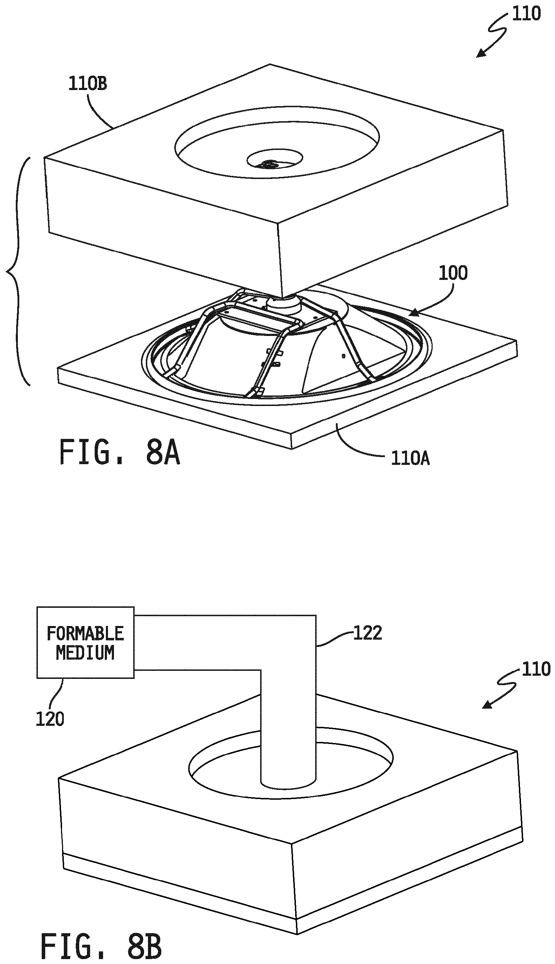

Following step 16, the process 10 advances to step 18 where the steering wheel assembly 100, illustrated by example in FIGS. 6A and 6B, is placed in a mold configured to receive a formable medium, e.g., a molding compound, to be formed about at least the hand grip 52 portion of the steering wheel assembly 100. An illustrative example of step 18 is depicted in FIGS. 8A and 8B in which the steering wheel assembly 100 is shown placed in a mold 110 that is illustratively configured to receive a formable medium about the hand grip 52, the spokes 56 and at least a portion of the center plate 54. It will be understood that in FIG. 8A, the steering wheel assembly 100 is shown in a basic form with the heating and thermal insulating components hidden for ease of illustration. In any case, in some alternate embodiments, the mold 110 may be configured to receive the formable medium about only the hand grip 52 or a portion thereof, about the hand grip 52 and only one or more of the spokes 56A-56D or about the entirety of the steering wheel assembly 100, i.e., about the hand grip 52, the center plate 54 and all spokes 56A-56D. The mold 110 is illustratively conventional in construction and operation. It will be understood that the mold 110 is a two-part structure having a bottom section 110A configured to receive the steering wheel assembly 100 therein, and a top section 110B which is received over the bottom section and secured thereto. With the top section 110B received over and secured to the bottom section 110A, the top section 110B of the mold 110 is coupled, via one or more coupling passageways 122, to a source 120 of the formable medium. In the illustrated embodiment, the formable medium 120 is supplied to the mold 110 via conventional injection molding or other conventional flow process.

Following step 18, the process 10 advances to step 20 where the formable medium is dispensed into the mold 110 and about at least a portion of the hand grip 52 of the steering wheel assembly 100 in accordance with a conventional formable medium dispensing process. In one embodiment, the formable medium is a conventional polyurethane made from a conventional blend of a polymeric polyol and an isocyanate which cures to form a rigid, semi-pliable or pliable overmold (or overmolding) encasing at least a portion of the hand grip 52 of the steering wheel assembly 100 as described above. In alternate embodiments, the formable medium may be or include any formable polymer or other suitable medium which cures to form a rigid, semi-pliable or pliable overmold encasing at least a portion of the hand grip 52 of the steering wheel assembly 100.

The process 10 advances from step 18 to step 20 where the formable medium is cured in the mold 110 to form a molded, heatable steering wheel assembly, i.e., to form the rigid, semi-pliable or pliable overmold surrounding and encasing at least a portion of the hand grip 52 of the steering wheel assembly 100. In some embodiments, the curing process of step 20 may include one or more of elapsed time, e.g., chemical reaction time, such as an elapsed time for a mixture of a resin and a hardener to cure, moisture curing time, etc., applied heat or cooling and/or applied pressure or vacuum.

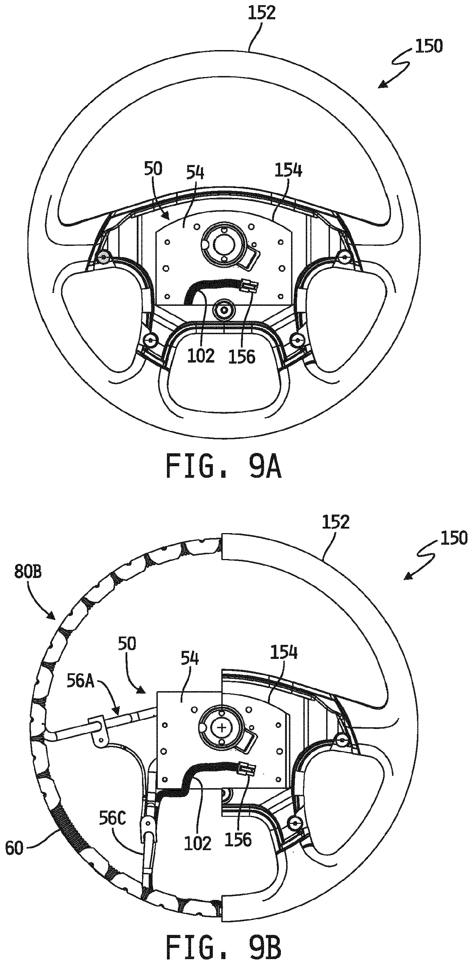

An illustrative example of a molded steering wheel assembly 150 resulting from step 20 of the process 10 is depicted in FIGS. 9A and 9B in which the overmold 150 is shown encasing, i.e., extending completely about and bonded or otherwise adhered to, the hand grip portion 52, a portion of the center plate 54 completely about its outer periphery and each of the spokes 56A-56D of the steering wheel assembly 100. A central portion 154 of the center plate 54 is left exposed as illustrated by example in FIGS. 9A and 9B. In this example, which should not be considered to be limiting in any way, the overmold 150 is a polyurethane made up of a combination of a conventional polyol and a conventional isocyanate hardener which cures in the mold 110 over time as the combination of polyol and isocyanate chemically react with one another. In alternate embodiments, as described above, the overmold 150 may encase more or less of the steering wheel assembly 100. In any case, the electrical wire(s) 102 connected to the heating element strips 801, 802 (and the thermocouple 106, in embodiments which include it) are also depicted in FIGS. 9A and 9B as being accessible at or near the central portion of the center plate 54 and operatively coupled to a conventional electrical connector 156.

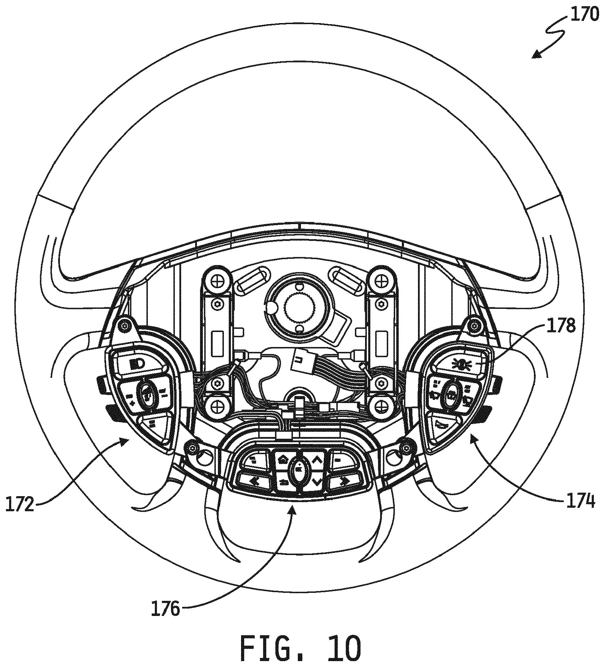

In some embodiments, various feature control modules or pods may be operatively coupled to the molded steering wheel assembly 150 to form a finished steering wheel assembly suitable for installation in a motor vehicle. An example of such a finished steering wheel 170 is shown in FIG. 10, and illustratively includes three control pods 172, 174, 176 each mounted between different respective combinations of the spokes 56A-56D. In the illustrated embodiment, a manually actuatable button or switch 178 is provided on the control pod 176 for selectively activating the heating element strips 801, 802 to thereby selectively heat at least the hand grip portion of the steering wheel assembly 170. The control pod 176, as well as the control pods 172, 174, illustratively include various switches, buttons and/or levers for selectively controlling other conventional features of the motor vehicle.

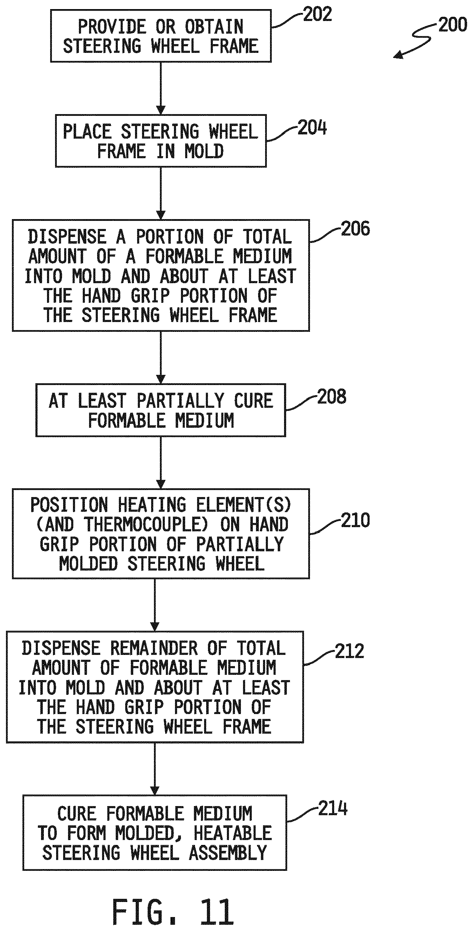

Referring now to FIG. 11, a simplified flowchart is shown illustrating another embodiment of a process 200 for forming a molded, heatable steering wheel assembly. The process 200 is similar in many respects to the process 10 illustrated in FIG. 1 as will be noted in the following description.

The process 200 depicted in FIG. 11 illustratively begins at step 202 where a steering wheel frame is provided or obtained, and at step 204 the steering wheel frame is placed in a mold. Steps 202 and 204 are illustratively the same as steps 12 and 18 of the process 10 illustrated in FIG. 1. Following step 204, the process 200 advances to step 206 where a portion of a total amount of a formable medium is dispensed into the mold such that it surrounds at least the hand grip portion of the steering wheel frame. As used to describe step 206, the term "total amount" should be understood to mean a total amount of the formable medium that would be used to form the molded, heatable steering wheel assembly, i.e., that amount used at step 20 of the process 10 illustrated in FIG. 1. The portion of this total amount dispensed at step 306 is illustratively enough to completely surround the hand grip portion of the steering wheel frame, i.e., so as to leave none of the hand grip portion exposed, but less than the total amount of the formable medium that will be used to produce the molded, heatable steering wheel assembly.

Following step 206, the process 200 advances to step 208 where the portion of the formable medium dispensed at step 206 is at least partially cured in the mold. Any one or combination of the formable medium curing techniques described above may be used to carry out step 208, which will generally depend on the type and make-up of the formable medium used. In any case, the process 200 advances from step 208 to step 210 where the one or more heating elements is/are positioned on the hand grip portion of the steering wheel frame, i.e., on top of the at least partially cured molding compound so as to be spaced apart from the hand grip portion of the steering wheel frame by the at least partially cured formable medium. In embodiments which include it, the thermocouple or temperature sensor(s) are likewise positioned on, under or alongside the one or more heating elements. In this regard, the portion of the formable medium dispensed at step 206 need only be cured at step 208 sufficiently, i.e., with sufficient structural form, to support the one or more heating elements and, in embodiments which include it/them, the thermocouple or temperature sensor(s). As such, step 208 may illustratively be carried out by curing the formable medium in the mold to any degree of firmness or hardness between that which sufficient form to support the one or more heating elements and fully cured. In this way, the heating element(s) (and, in some embodiments, the thermocouple and/or temperature sensor(s)) is/are spaced apart from the hand grip portion of the steering wheel frame by at least a portion of the formable medium, thereby obviating any need for a thermal insulator of the type described at step 14 of the process 10.

The process 200 advances from step 210 to step 212 where the remainder of the total amount of the formable medium is dispensed into the mold. The remainder will illustratively be sufficient to encase or envelope, i.e., completely surround, the one or more heating elements (and, in some embodiments, the thermocouple and/or temperature sensor(s)) and to bond or otherwise or adhere to the at least partially cured molding compound dispensed at step 206, and to further encase or envelop the one or more spokes and at least an outer periphery of the central plate. Thereafter at step 214, the formable medium is cured, as described above, to produce the molded, heatable steering wheel assembly as depicted by example in FIGS 9A and 9B.

While this disclosure has been illustrated and described in detail in the foregoing drawings and description, the same is to be considered as illustrative and not restrictive in character, it being understood that only illustrative embodiments thereof have been shown and described and that all changes and modifications that come within the spirit of this disclosure are desired to be protected.

## Claims

1. A process for forming a molded, heatable steering wheel assembly, the process comprising:
providing or obtaining a steering wheel frame including at least one hand grip coupled to one or more spokes,
coupling at least one heating element to, or spacing the at least one heating element from, at least a portion of the at least one hand grip to form a steering wheel assembly,
placing the steering wheel assembly in a mold,
dispensing a formable medium into the mold such that the formable medium encases at least the at least one hand grip and the at least one heating element, and
curing the formable medium to form the molded, heatable steering wheel assembly.

2. The process of claim 1, wherein coupling the at least one heating element to, or spacing the at least one heating element from, at least a portion of the at least one hand grip to form a steering wheel assembly comprises coupling the at least one heating element to the at least a portion of the at least one hand grip,
and further comprising interposing a thermal insulating material between the at least one heating element and the at least a portion of the at least one hand grip.

3. The process according to claim 2, wherein coupling the at least one heating element to the at least a portion of the at least one hand grip comprises coupling at least one heating element strip to the at least a portion of the at least one hand grip.

4. The process according to claim 3, wherein coupling the at least one heating element strip to the at least a portion of the at least one hand grip comprises coupling the at least one heating element strip to and along a full length of the at least one hand grip.

5. The process according to claim 3, wherein the at least one hand grip comprises an annular tube or ring with the one or more spokes coupled to the annular tube,
and wherein coupling the at least one heating element strip to the at least a portion of the at least one hand grip comprises coupling the at least one heating element strip to and along a full length of the annular tube or ring.

6. The process according to claim 1, wherein coupling the at least one heating element to, or spacing the at least one heating element from, at least a portion of the at least one hand grip to form a steering wheel assembly comprises spacing the at least one heating element from the at least a portion of the at least one hand grip.

7. The process according to claim 6, wherein spacing the at least one heating element from the at least a portion of the at least one hand grip comprises spacing at least one heating element strip from the at least a portion of the at least one hand grip.

8. The process according to claim 7, wherein spacing the at least one heating element strip from the at least a portion of the at least one hand grip comprises spacing the at least one heating element strip from and along a full length of the at least one hand grip.

9. The process according to claim 7, wherein the at least one hand grip comprises an annular tube or ring with the one or more spokes coupled to the annular tube or ring,
and wherein spacing the at least one heating element strip from the at least a portion of the at least one hand grip comprises spacing the at least one heating element strip from and along a full length of the annular tube or ring.

10. The process according to claim 1, wherein dispensing a formable medium into the mold comprises dispensing a polyurethane compound into the mold.

11. The process according to any of claims 1 through 10, further comprising coupling a thermocouple or at least one temperature sensor, along with the at least one heating element, to, or spacing the thermocouple or the at least one temperature sensor, along with the at least one heating element, from, the at least a portion of the at least one hand grip to form the steering wheel assembly.

12. The process according to any of claims 1 through 11, wherein dispensing the formable medium into the mold comprises dispensing the formable medium into the mold such that the formable medium encases a combination of the at least one hand grip and the at least one heating element and the one or more spokes.

13. A process for forming a molded according to claim 1, wherein the steering wheel frame is placed in the mold prior to coupling the at least one heating element to, or spacing the at least one heating element from, the at least a portion of the at least one hand grip, the process further comprising:
dispensing a first amount of the formable medium into the mold such that the first amount of the formable medium encases the at least one hand grip,
at least partially curing the first amount of the formable medium,
placing the at least one heating element on the at least partially cured first amount of the formable medium over at least a portion of the at least one hand grip,
dispensing a second amount of the formable medium into the mold such that the second amount of the formable medium encases the at least one heating element and contacts at least a portion of the at least partially cured first amount of the formable medium, and
curing the second amount of the formable medium and any uncured portion of the first amount of the formable medium to form the molded, heatable steering wheel assembly.

14. The process according to claim 13, wherein placing the at least one heating element on the at least partially cured first amount of the formable medium over at least a portion of the at least one hand grip comprises placing at least one heating element strip on the at least partially cured first amount of the formable medium over at least a portion of the at least one hand grip.

15. A molded, heatable steering wheel assembly produced according to any of claims 1 through 14.
